# EUROPEAN PATENT APPLICATION

(11) **EP 2 424 198 A2**
(43) Date of publication of application: **29.02.2012**
(21) Application number: 11006035.7
(22) Date of filing: 22.07.2011
(51) Int. Cl.: H04M 1/60

(54) **Intelligent audio routing for incoming calls**

(30) Priority: 23.08.2010 US 861129
(71) Applicant: Sony Ericsson Mobile Communications AB, 221 88 Lund (SE)
(72) Inventor: Sandell, Philip, 21771 Malmö (SE)
(74) Representative: Meier, Florian

(57) **Abstract**

A user's wireless communication device communicates cellular signals with a remote party over a wireless communications network and short-range wireless signals with a headset worn by the user. Upon receiving an incoming call, a controller in the user's device determines whether a microphone integrated with the user's device, or a microphone integrated with the headset, is closest to the user's mouth. Based on that determination, the controller routes the incoming audio signals to whichever speaker is associated with the microphone that is closest to the user's mouth.

## Description

### FIELD OF THE INVENTION

The present invention relates generally to wireless communication devices, and more particularly to wireless communication devices configured to communicate with hands-free headsets over a short-range wireless interface.

### BACKGROUND

Cellular communication devices, such as cellular telephones, are commonly used by many people. Often times, people connect a variety of different peripheral devices so that they may utilize their cellular device more comfortably. One such peripheral device is a Bluetooth^{®} headset. As is known in the art, Bluetooth^{®} headsets include a microphone and a speaker to allow users to operate their cellular devices in a "hands-free" mode. This mode of operating a cellular telephone is very beneficial for many users, especially those who operate motor vehicles. However, drivers are not the only beneficiaries of this technology. Many users wear Bluetooth^{®} headsets during the day because they find it more comfortable to use than having to hold a device against their ear.

As is known in the art, the cellular telephone will usually establish a short-range communication link with the headset. Thus, when paired with the cellular telephone, the audio signals that are associated with an incoming call are generally routed from the cellular telephone to the speaker in the headset. However, there could be situations wherein a user may want to dynamically route incoming audio signals to a speaker at the cellular telephone instead of to the speaker at the headset.

### SUMMARY

According to the present invention, a wireless communication device as defined in claim 1 and a method of routing audio signals associated with an incoming call received at a wireless communication device as defined in claim 9 are provided. The dependent claims define preferred embodiments of the invention.

The present invention selectively routes audio signals associated with an incoming call either to a speaker integrated with the receiving wireless communication device, or to a speaker integrated with a hands-free headset paired with the device. The decision on which speaker to direct the audio signals is based on the placement of a microphone relative to a user's mouth.

In one embodiment, the present invention provides a wireless communication device configured to communicate short-range wireless signals with a corresponding headset. In this embodiment, the wireless communication device comprises a microphone, a speaker, a short-range transceiver configured to communicate with the headset, and a controller. The controller is configured to measure an audio reception quality for the microphone at the wireless communication device, measure an audio reception quality for a microphone at the headset, and route audio signals associated with the incoming call to the speaker at the wireless communication device, or to a speaker at the headset, based on the measured audio reception qualities.

In one embodiment, the controller is further configured to determine which of the microphones is positioned closest to the user's mouth based on the measured audio reception qualities, and route the audio signals associated with the incoming call to the speaker associated with the microphone that is closest to the user's mouth.

By way of example, the controller is configured to route the audio signals associated with the incoming call to the speaker at the wireless communication device if the controller determines that the microphone at the wireless communication device is closer to the user's mouth than the microphone at the headset.

Similarly, the controller is configured to route the audio signals associated with the incoming call to the speaker at the headset if the controller determines that the microphone at the headset is closer to the user's mouth than the microphone at the wireless communication device.

In one embodiment, the controller is configured to route the audio signals associated with the incoming call to a default speaker if the controller is unable to determine which of the microphones is closest to the user's mouth.

In one embodiment, the default speaker comprises the speaker at the wireless communication device. In another embodiment, the default speaker comprises the speaker at the corresponding headset.

In one embodiment, the controller is further configured to enable both of the microphones responsive to receiving user input to accept incoming call.

In one embodiment, the controller is further configured to poll both of the microphones to detect audible sound, and individually measure the audio reception qualities at both of the microphones based on the audible sound detected at both microphones.

The present invention also provides a method of routing audio signals associated with an incoming call received at the wireless communication device. In this embodiment, the wireless communication device, which is configured to communicate with a corresponding headset, measures an audio reception quality for a microphone at the wireless communication device and measures an audio reception quality for a microphone at the corresponding headset. Based on the measured audio reception qualities, the wireless communication device routes the audio signals associated with the incoming call either to a speaker at the wireless communication device, or to a speaker at the headset.

In one embodiment, the method further comprises determining which of the microphones is positioned closest to a user's mouth based on the measured audio reception qualities, and routing the audio signals associated with the incoming call to the speaker associated with the microphone that is closest to the user's mouth.

In one embodiment, the audio signals associated with the incoming call are routed to the speaker at the wireless communication device if the microphone at the wireless communication device is closer to the user's mouth than the microphone at the headset.

In one embodiment, the audio signals associated with the incoming call are routed to the speaker at the headset if the microphone at the headset is closer to the user's mouth than the microphone at the wireless communication device.

In one embodiment, the audio signals associated with the incoming call are routed to a default speaker if the wireless communication device is unable to determine which of the microphones is closest to the user's mouth.

In one embodiment, the default speaker comprises the speaker at the wireless communication device.

In one embodiment, the default speaker comprises the speaker at the corresponding headset.

In one embodiment, the method further comprises enabling both of the microphones to detect audible sound responsive to receiving user input to accept incoming call.

In one embodiment, the method further comprises polling both of the microphones to detect the audible sound, and individually measuring the audio reception qualities at both of the microphones based on the audible sound detected at both microphones.

### BRIEF DESCRIPTION OF THE DRAWINGS

Figure 1 is a perspective view of a wireless communication device communicating with a headset according to one embodiment of the present invention.

Figure 2 is a block diagram illustrating some of the component parts of a headset communicating with a wireless communication device configured according to one embodiment of the present invention.

Figure 3 is a flow diagram illustrating a method performed by a controller in a user's wireless communication device according to one embodiment of the present invention.

Figure 4 is a flow diagram illustrating a method performed by a controller in a user's wireless communication device according to another embodiment of the present invention.

Figure 5 is a perspective view of a computing device communicating with a headset according to one embodiment of the present invention.

### DETAILED DESCRIPTION

The present invention provides a wireless communication device configured to selectively route audio signals associated with an incoming call to one of a plurality of speakers based on the placement of a microphone relative to a user's mouth. In one embodiment, the wireless communication device is paired with a wireless headset, such as a Bluetooth^{®} headset, for example. Both the wireless communication device and the headset have respective microphones and speakers.

According to the present invention, a controller at the wireless communication device enables both microphones upon detecting that a user will accept an incoming call. The controller then polls both microphones to determine which of the microphones detects a user utterance (e.g., such as when the user says "Hello" to greet the calling party). Based on audio reception qualities measured at each microphone, the controller determines which of the microphones is closest to the user's mouth. The controller then routes the incoming audio signals to a speaker associated with the microphone that is determined to be closest to the user's mouth.

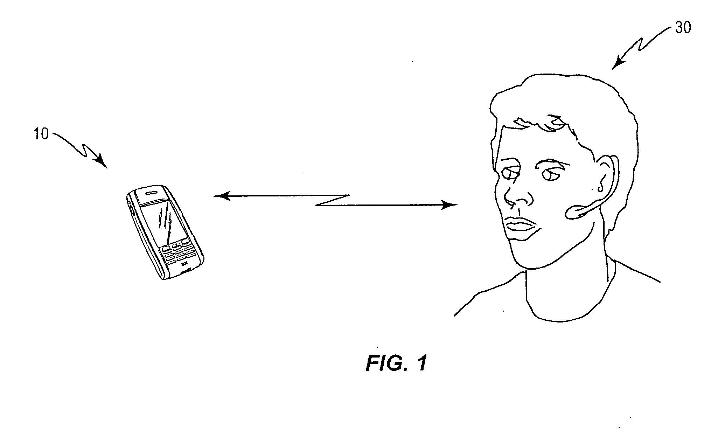

Turning now to the drawings, Figure 1 is a perspective view illustrating a wireless communication device configured according to one embodiment of the present invention. As seen in Figure 1, the wireless communication device comprises a cellular telephone 10 and is paired with a peripheral device comprising a wireless headset 30. However, as seen in more detail later, the present invention is suitable for use in other communications devices, such as satellite telephones, Personal Digital Assistants (PDAs), and computing devices such as laptop and notebook computers.

Cellular telephone 10 and headset 30 communicate with each other via a well-known short-range wireless protocol, such as the Bluetooth^{®} protocol, for example. Initially, the cellular telephone 10 and headset 30 execute a procedure to pair with each other and establish a short-range communication link between them. That procedure is well-known to those of ordinary skill in the art and not germane to the present invention. Therefore, it is not discussed in detail herein. It is sufficient to understand that, once paired, headset 30 converts signals received at its microphone into signals compatible with a short-range wireless protocol and transmits the converted signals to the cellular telephone 10. Headset 30 also converts wireless signals received from the cellular telephone 10 to signals compatible with a speaker in headset 30.

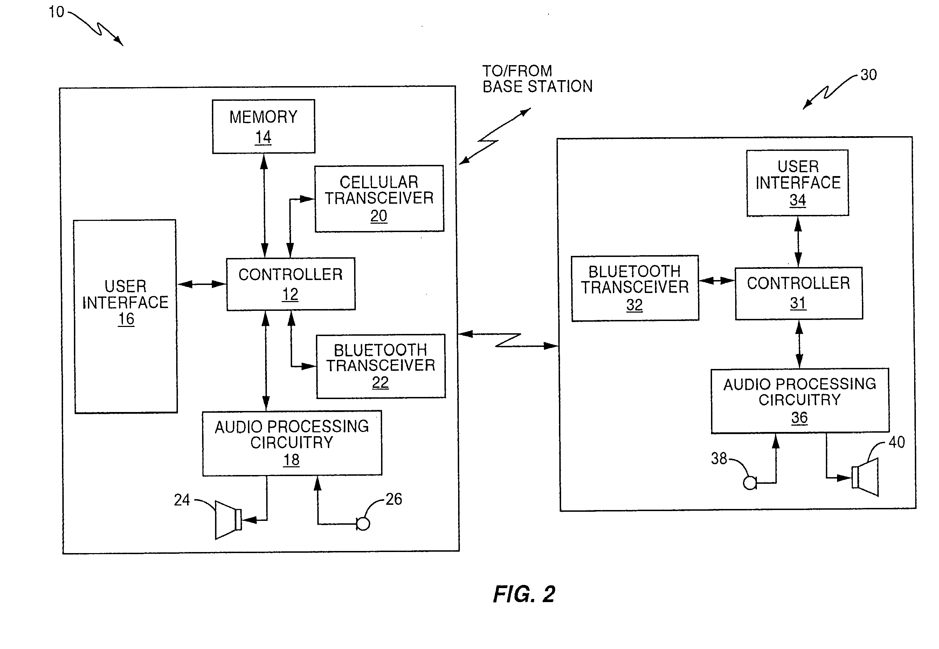

Figure 2 is a block diagram illustrating some of the components of a cellular telephone 10 configured according to one embodiment of the present invention as well as an exemplary wireless headset 30. Beginning with the cellular telephone 10, it comprises a controller 12, a memory 14, a user I/O interface 16, audio processing circuitry 18, a cellular transceiver 20, a short-range transceiver 22, a speaker 24, and a microphone 26. Controller 12 may be, for example, one or more general purpose or special purpose microprocessors that control the operation and functions of the cellular telephone 10 in accordance with program instructions and data stored in memory 14. In one embodiment of the present invention, the controller 12 executes a program to determine which microphone (i.e., a microphone at the cellular telephone 10 or a microphone at the headset 30) is nearest the user's mouth. Based on that determination, controller 12 will route the audio signals associated with an incoming call (e.g., the signals carrying the voice of the remote party) to a speaker associated with that microphone.

Memory 14 represents the entire hierarchy of memory in cellular telephone 10, and may include both random access memory (RAM) and read-only memory (ROM). Memory 14 stores the program instructions and data required for controlling the operation and functionality of cellular telephone 10. In one embodiment of the present invention, memory 14 stores the instructions and data required by controller 12 for routing the audio signals of incoming calls based on the location of a microphone relative to the user's mouth.

The user interface 16 enables a user to input information into cellular telephone 10 and includes devices and controls that facilitate such interaction. Typically, the user interface 16 includes a display (e.g., an LCD or touch-sensitive display) that allows the user to view information such as dialed digits, images, call status, menu options, and other service information. The user interface 16 also includes a keypad that allows the user to enter digits and other alpha-numeric input, as well as an integrated microphone 26 and an integrated speaker 24. Microphone 26 converts speech into electrical audio signals for processing by audio processing circuit 18, and speaker 24 converts the audio signals provided by audio processing circuit 18 into audible sounds for rendering to the user.

Cellular transceiver 20 is a fully functional cellular radio transceiver for transmitting signals to and receiving signals from a base station or other access node in a wireless communications network. Those skilled in the art will appreciate that cellular transceiver 20 may implement any one of a variety of communication standards including, but not limited to, the standards known as the Global System for Mobile Communications (GSM), General Packet Radio Service (GPRS), Universal Mobile Telecommunication System (UMTS), TIA/EIA-136, cdmaOne (IS-95B), cdma2000, and Wideband CDMA (W-CDMA).

Cellular telephone 10 also includes a short-range wireless transceiver, such as a Bluetooth^{®} transceiver 22. As is known in the art, Bluetooth^{®} is a universal radio interface that enables two or more wireless devices to communicate wirelessly via short-range ad hoc networks. Bluetooth^{®} generally uses a polling based communication infrastructure to transmit and receive digital data between the wireless devices. In the present invention, the Bluetooth^{®} transceiver 22 establishes a short-range communications link with a corresponding short-range transceiver associated with headset 30. Digital signals carrying voice and/or control signals are communicated between the cellular telephone 10 and headset 30 via the short-range communications link.

The headset 30 comprises a controller 31, a short-range transceiver such as a Bluetooth^{®} transceiver 32, a user interface 34, an audio processing circuit 36, a microphone 38, and a speaker 40. The controller 31 controls the operation of the Bluetooth^{®} transceiver 32 according to a desired mode of operation. The Bluetooth^{®} transceiver 32 communicates wireless signals with the Bluetooth^{®} transceiver 22 of cellular telephone 10. The user interface typically comprises an on/off control button that powers-up (and down) the headset 30 responsive to the user actuating the control, but may include other controls as well. The audio processing circuitry 36 receives electrical audio signals from the microphone 38 and converts them to digital signals for the short-range transceiver 32 to transmit to the short-range transceiver 22. The audio processing circuitry 36 also receives digital audio signals from the cellular telephone 10 via short-range transceiver 32, and processes those signals for rendering to the user on speaker 40. There is a wide variety of styles for headset 30, and the present invention is not restricted to any one particular style. However, in one embodiment, the speaker 40 and the microphone 38 of headset 30 are positioned at opposite ends of a boom that fits to the user's head.

As previously stated, headsets such as headset 30 are often employed by many users. However, they are not optimized for every situation. For example, consider a situation where a user's cellular telephone 10 receives an incoming call. If the user has the headset 30, the user would likely want speaker 40 of headset 30 to render the audio signals associated with the incoming call. However, if the user had misplaced the headset 30, the user would likely want speaker 24 of cellular telephone 10 to render the audio signals associated with the incoming call. Consider also a situation where a user is listening to music when the cellular telephone 10 receives an incoming call. In these cases, the user would likely want to have the audio signals routed to speaker 40 integrated with headset 30.

Therefore, depending upon the situation, the user may want to route the audio signals associated with an incoming call to a different one of the speakers 24, 40. Additionally, the factors that define the situations where a user might need the audio routed to a specific one of the speakers 24, 40 change dramatically. Accordingly, the present invention addresses these situations by sensing which of the microphones 26 or 38 is closest to the user's mouth, and then routing the incoming audio signals to whichever speaker (24 or 40) is associated with that microphone.

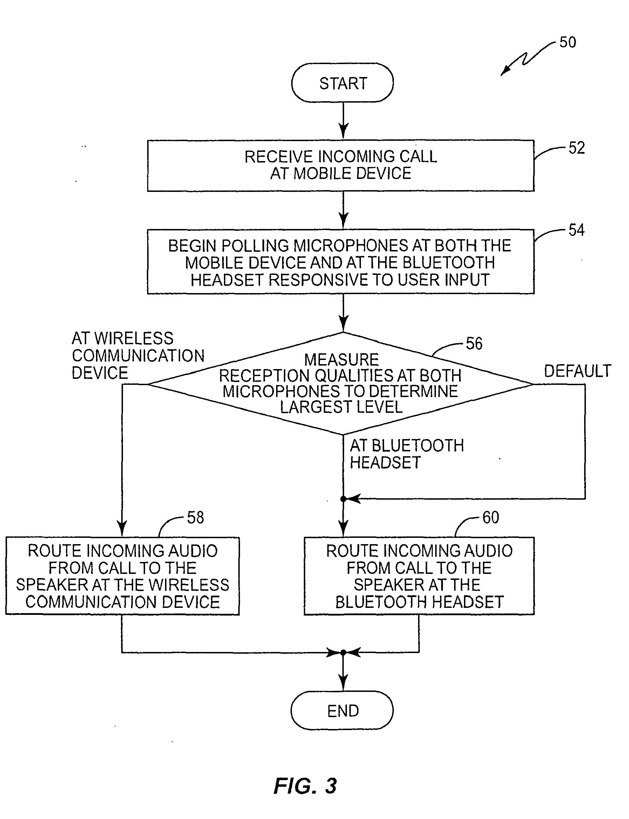

Figure 3 illustrates a method 50 that is performed at a user's cellular telephone 10 upon receiving an incoming call according to one embodiment of the present invention. Method 50 begins with the cellular telephone 10 receiving an incoming call from a remote party (box 52). Upon receiving the call, the user will generally first perform some action to accept the call, such as pressing a button on the keypad of cellular telephone 10. In one embodiment of the present invention, the action of accepting the incoming call triggers the controller 12 at the cellular telephone 10 to begin polling both of the microphones 26, 38 (box 54). Particularly, the controller 12 will enable microphone 26 at the cellular telephone 10, as well as the microphone 38 at the headset 30, to detect audible sound when the user utters "Hello" or some other greeting to the remote party (box 56). The controller 12 will then detect which microphone 26 or 38 is nearest to the user's mouth based on this utterance.

There are many methods for determining the proximity of microphones 26 and 38 to the user's mouth that are suitable for use with the present invention. However, in one embodiment, one or both of the microphones will produce electrical signals based on the detected audible sound. Controller 12 will measure the audio reception qualities of these signals at each microphone 26, 38. Whichever microphone is closest to the user's mouth will have the largest measured audio reception quality. A simple comparison of these levels will identify the microphone having the largest audio reception quality, and thus, the microphone that is closest to the user's mouth. Therefore, if controller 12 measures a larger audio reception quality level at microphone 26 (box 56), controller 12 will determine that microphone 26 is closest to the user's mouth and route the incoming audio signals to speaker 24 (box 58). However, if controller 12 measures a larger audio reception quality level at microphone 38, controller 12 will determine that the microphone 38 is closer to the user's mouth, and therefore, route the incoming audio signals to speaker 40 of headset 30 via the short-range communication link (box 60). If the controller 12 is unable determine which of the microphones 26, 38 is closest to the user's mouth (e.g., both microphones have the same measured audio reception levels, or have none at all), the controller 12 will simply route the incoming audio signals to whichever one of the speakers 24, 40 is the default speaker.

The default speaker may be either of the speakers 24, 40, and may be predefined as such by the manufacturer, or user-defined and stored in a configuration file in memory. In this embodiment, speaker 40 is indicated as being the default speaker. Therefore, if controller 12 is unable to determine which of the microphones is closest to the user's mouth, controller 12 routes the audio signals of the incoming call to the speaker 40 disposed in the headset 30 (box 60).

It should be noted that method 50 is performed when the user presses a button on the keypad, or activates some other control on cellular telephone 10. This would presume, for example, a situation wherein the user had misplaced the headset 30 or did not want to use the headset 30 to converse with the remote party. If the user pressed a button on headset 30 to answer the call, the controller 12 would not poll the microphones 26, 38 as previously described, but instead, would assume that the user is wearing the headset 30 and automatically route the incoming audio signals to speaker 40.

Additionally, the present invention is designed to judiciously draw on the power resources of both the cellular telephone 10 and the headset 30. Although the controller 12 enables both microphones 26, 38 to poll for a user utterance, they are enabled and polled only for a short time. For example, polling of both microphones 26, 38 would occur only for the amount of time it would usually take the user say "Hello" or utter some other greeting after pushing an answer button on the keypad (e.g., 2 seconds). If the controller 12 does not detect audible sound within that time limit, the controller 12 would send the incoming audio signals to the default speaker.

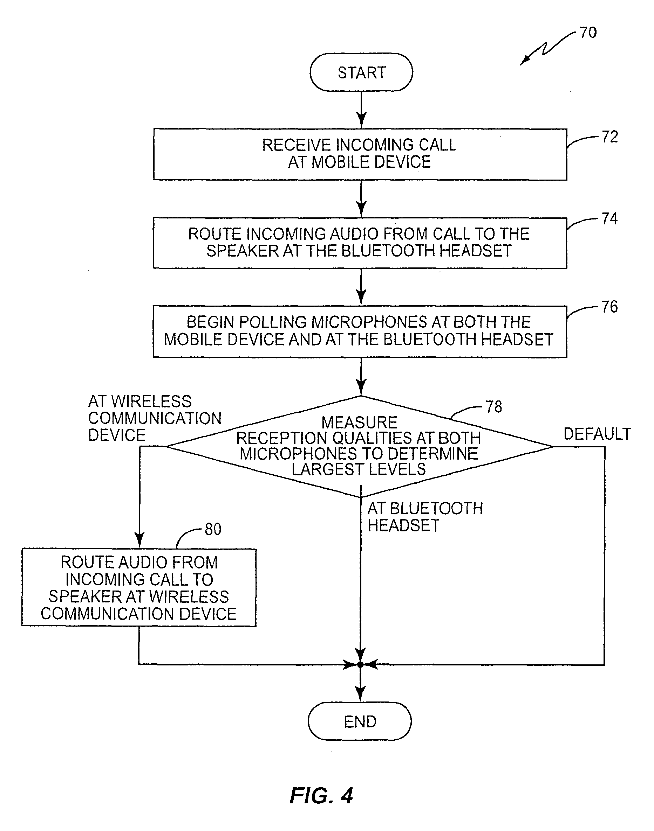

In another embodiment of the present invention, the controller 12 may be configured automatically direct the incoming audio signals to a pre-selected one of the speakers 24, 40, and then change the routing only if a change is needed. Figure 4 is a flow diagram illustrating one such method 70 performed by the controller 12 at the cellular telephone 10. As above, method 70 begins with the user's cellular telephone 10 receiving an incoming call indication from the wireless communication network (box 72). Upon receiving the incoming call indication, the controller 12 automatically routes the incoming audio signals to the speaker 40 in the headset 30 (box 74). Thus, controller 12 may operate based on the assumption that the user is wearing the headset 30. The controller 12 then enables both microphones 26, 38 and begins to poll to detect a user utterance such as "Hello" (box 76). Based on the measured audio reception quality levels associated with the detected utterance, the controller 12 will determine which microphone (i.e., microphone 26 or microphone 38) is closest to the user's mouth (box 78).

As above, the controller 12 may, for example, measure the audio reception quality levels for each microphone 26, 38 based on the audible sound detected at each microphone 26, 38. The controller 12 can then compare the two levels to determine which microphone 26, 38 has the larger audio reception quality level, and thus, is closest to the user's mouth. If the controller detects that the microphone 38 of headset 30 is closest to the user's mouth (i.e., microphone 38 has the larger level), the controller 12 would do nothing as the audio signals are already being routed to speaker 40 at the headset (box 78). Additionally, if the controller 12 cannot determine which microphone 26, 38 is closest, controller 12 routes the audio signals to the speaker 40 at headset 30 by default. Otherwise, if controller 12 determines that microphone 26 at cellular telephone 10 has the larger level, controller 12 would cease routing the incoming audio signals to the headset 30, and begin routing the incoming audio signals to speaker 24 at the cellular telephone 10 (box 80).

The present invention may, of course, be carried out in other ways than those specifically set forth herein without departing from essential characteristics of the invention. For example, the previous embodiments described the present invention in the context of receiving a cellular telephone call from a remote party via a Base Station (BS) a wireless communication network. However, the present invention is not so limited. As used herein, the term "incoming call" is meant to define an incoming communication that will cause the party receiving the call to respond via voice. Thus, as used herein, an "incoming call" includes, but is not limited to, incoming cellular voice calls, satellite calls, and Voice over IP (VOIP) telephony and/or video calls, such as video conferencing calls and those supported by Skype^{®}.

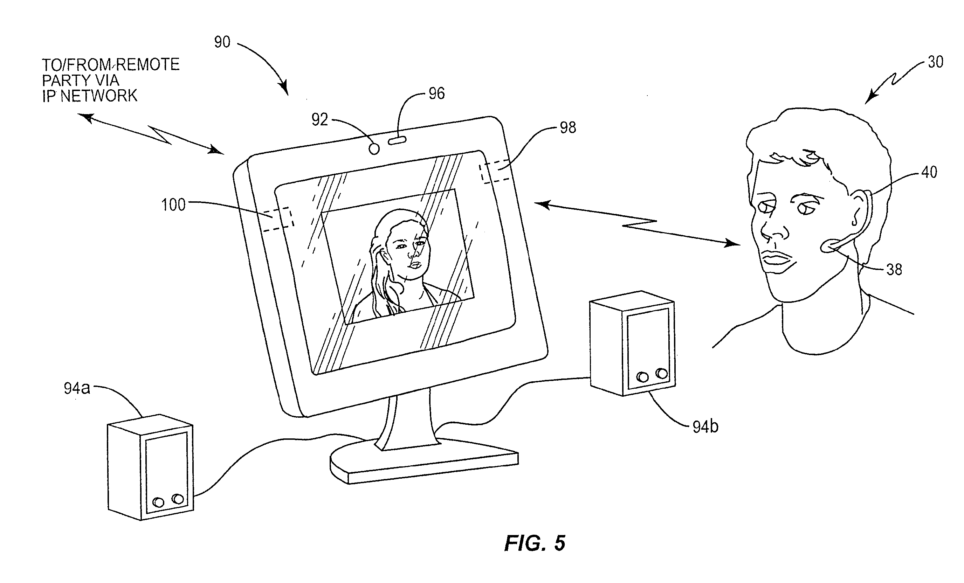

Figure 5, for example, illustrates one such embodiment wherein the user having headset 30 is engaged in a VOIP video call with a remote party. As seen in Figure 5, the user has a personal computing device 90 capable of executing VOIP software applications such as Skype^{®}. In addition to the microphone 38 and speaker 40 that is integrated with headset 30, the computing device 90 also includes a integrated microphone 92 and a pair of speakers 94a, 94b. In this embodiment, computing device 90 also includes an integrated video camera 96 capable of capturing the user's image.

The computing device 90, as is known in the art, is communicatively connected to a private or public IP communication network, such as the Internet, for example. The connection may be wireless via a home wireless router, for example, or cable-based via an Ethernet network. In operation, when the user accepts an incoming call via Skype^{®}, the computing device 90 will display the remote party's received video image on the display of computing device 90. The camera 96 will also capture the user's video image and sent it to the remote party for display. Additionally, a controller 100 at the computing device 90 will perform the previously described method to determine whether microphone 38 or microphone 92 is closest to the user's mouth. For example, controller 100 could generate control signals to enable both microphones 38 and 92 to listen for the user's voice when the user accepts the incoming call. If, based on an analysis of the audio reception quality levels measured at the microphones 38 and/or 92, the controller 100 determines that microphone 92 is closest to the user's mouth, controller 100 will send the incoming audio signals to the speakers 94a, 94b for rendering to the user. However, if the analysis reveals that the microphone 38 is closest to the user's mouth, controller 100 will route the incoming audio signals to the speaker 40 that is integrated with the headset 30 via a short-range transceiver 98 (e.g,. a Bluetooth^{®} interface) as stated above.

Therefore, the present embodiments are to be considered in all respects as illustrative and not restrictive, and all changes coming within the meaning and equivalency range of the appended claims are intended to be embraced therein.

## Claims

1. A wireless communication device (10) configured to communicate short-range wireless signals with a corresponding headset (30), the wireless communication device (10) comprising:
a microphone (26);
a speaker (24);
a short-range transceiver (22) configured to communicate with the headset (30); and
a controller (12) configured to:
measure an audio reception quality for the microphone (26) at the wireless communication device (10);
measure an audio reception quality for a microphone (38) at the headset (30); and
route audio signals associated with the incoming call to the speaker (24) at the wireless communication device (10), or to a speaker (40) at the headset (30), based on the measured audio reception qualities.

2. The wireless communication device (10) of claim 1 wherein the controller (12) is further configured to:
determine which of the microphones (26, 38) is positioned closest to a user's mouth based on the measured audio reception qualities; and
route the audio signals associated with the incoming call to the speaker (24, 40) associated with the microphone (26, 38) that is closest to the user's mouth.

3. The wireless communication device (10) of claim 2 wherein the controller (12) is configured to route the audio signals associated with the incoming call to the speaker (24) at the wireless communication device (10) if the controller (12) determines that the microphone (26) at the wireless communication device (10) is closer to the user's mouth than the microphone (38) at the headset (30).

4. The wireless communication device (10) of claim 2 or claim 3 wherein the controller (12) is configured to route the audio signals associated with the incoming call to the speaker (40) at the headset (30) if the controller (12) determines that the microphone (38) at the headset (30) is closer to the user's mouth than the microphone (26) at the wireless communication device (10).

5. The wireless communication device (10) of any one of claims 2-4 wherein the controller (12) is configured to route the audio signals associated with the incoming call to the speaker (24) at the wireless communication device (10) if the controller (12) is unable to determine which of the microphones(26, 38) is closest to the user's mouth.

6. The wireless communication device (10) of any one of claims 2-4 wherein the controller (12) is configured to route the audio signals associated with the incoming call to the speaker (40) at the corresponding headset (30) if the controller (12) is unable to determine which of the microphones (26, 38) is closest to the user's mouth.

7. The wireless communication device (10) of any one of claims 1-6 wherein the controller (12) is further configured to enable both of the microphones (26, 38) responsive to receiving user input to accept the incoming call.

8. The wireless communication device (10) of claim 7 wherein the controller (12) is further configured to:
poll both of the microphones (26, 38) to detect audible sound; and
individually measure the audio reception qualities at both of the microphones (26, 38) based on the audible sound detected at both microphones (26, 38).

9. A method of routing audio signals associated with an incoming call received at a wireless communication device (10) configured to communicate with a corresponding headset (30), the method comprising:
measuring an audio reception quality for a microphone (26) at the wireless communication device (10);
measuring an audio reception quality for a microphone (38) at the corresponding headset (30); and
routing audio signals associated with an incoming call to a speaker (24) at the wireless communication device (10), or to a speaker (40) at the headset (30), based on the measured audio reception qualities.

10. The method of claim 9 further comprising:
determining which of the microphones (26, 38) is positioned closest to a user's mouth based on the measured audio reception qualities; and
routing the audio signals associated with the incoming call to the speaker (24, 40) associated with the microphone (26, 38) that is closest to the user's mouth.

11. The method of claim 10 further comprising routing the audio signals associated with the incoming call to the speaker (24) at the wireless communication device (10) if the microphone (26) at the wireless communication device (10) is closer to the user's mouth than the microphone (38) at the headset (30).

12. The method of claim 10 or claim 11 further comprising routing the audio signals associated with the incoming call to the speaker (40) at the headset (30) if the microphone (38) at the headset (30) is closer to the user's mouth than the microphone (26) at the wireless communication device (10).

13. The method of any one of claims 10-12 further comprising routing the audio signals associated with the incoming call to the speaker (24) at the wireless communication device (10) if the wireless communication device (10) is unable to determine which of the microphones (26, 38) is closest to the user's mouth.

14. The method of any one of claims 10-12 further comprising routing the audio signals associated with the incoming call to the speaker (40) at the corresponding headset (30) if the wireless communication device (10) is unable to determine which of the microphones (26, 38) is closest to the user's mouth.

15. The method of any one of claims 9-14 further comprising:
enabling both of the microphones (26, 38) to detect audible sound responsive to receiving user input to accept incoming call;
polling both of the microphones (26, 38) to detect audible sound; and
individually measuring the audio reception qualities at both of the microphones (26, 38) based on the audible sound detected at both microphones (26, 38).
